# EUROPEAN PATENT APPLICATION

(11) **EP 3 569 408 A1**
(43) Date of publication of application: **20.11.2019**
(21) Application number: 18172512.8
(22) Date of filing: 15.05.2018
(51) Int. Cl.: B32B 17/10, C08J 5/18

(54) **INTERLAYER FILMS HAVING ASYMMETRIC SURFACE ROUGHNESS**

(71) Applicant: Kuraray Europe GmbH, 65795 Hattersheim (DE)
(72) Inventor: LAZAR, Ion, 53840 Troisdorf (DE); ROGALL, Jan Denis, 53840 Troisdorf (DE)
(74) Representative: Janßen, Christian Oliver

(57) **Abstract**

The invention is directed to film based on plasticized polyvinyl acetal or ionomers having a first and a second surface and a first and a second edge opposing each other **characterized in that** at least the first surface is provided with a gradient in surface roughness with a decline in Rv from the first to the second edge of 5 to 75%.

Process of manufacturing a laminate comprising two transparent sheets with an interlayered film

## Description

### Background Art

The invention relates to interlayer films for laminated glazing based on plasticized polyvinyl acetal or ionomers having an asymmetric surface roughness and a process to manufacture the same.

Laminated safety glass consists usually of two glass panes combined by an adhesive film based on plasticized polyvinyl acetal, preferably of polyvinyl butyral (PVB). Laminated safety glass is used in particular as windscreens in motor vehicles.

For manufacture of such laminated glazing, a plasticized PVB film is sandwiched between two sheets of glass and after removal of entrapped air, and then heat and/or pressure is applied. For removal of air and to reduce the tackiness of the film during handling, the surface of the film is provided with a certain roughness. The roughness may be controlled by the extrusion process of the film and/or by a subsequent embossing step.

Extrusions and embossing steps of PVB films are well known in the art, for example as disclosed in EP 0 185 863 B1 as melt fracture process and in WO 2014021459 A1 as an embossing process.

Windscreens in motor vehicles are usually curve-shaped. In order to follow the shape of the glass, rectangular interlayer films are stretched until they have the same shape as the glass sheets. This technique is especially useful if the windscreen shall be provided with a shade band, i.e. with a tinted region at the upper part of the windscreen.

During this stretching process, roughness properties and thickness of the film change from a uniform distribution to an asymmetric distribution over the surface. For example, a film having a uniform surface roughness over its entire surface will have after stretching a gradient of roughness with a lower roughness at the stretched side of the film. The asymmetric distribution of roughness over the surface leads to different de-airing and melting behaviour of the film during lamination. The difference in behaviour may result in different de-airing performance of the stretched vs the non-stretched side and in the end to a higher loss rate in production of windscreens.

The invention is therefore directed to provide a film which has after stretching a substantially uniform distribution of surface roughness over its surface.

### Disclosure of Invention

Object of the inventions is a film based on plasticized polyvinyl acetal or ionomers having a first and a second surface and a first and a second edge opposing each other characterized in that at least the first surface is provided with a gradient in surface roughness with a decline in Rv from the first to the second edge of 5 to 75%.

In a first embodiment, at least the first surface is provided with a gradient in surface roughness with a decline in Rz from the first to the second edge of 5 to 75%.

In a second embodiment, at least the first surface is provided with channels having a gradient in Rsm from the first to the second edge of 5 to 75%.

In a third embodiment the film is provided with a thickness having a gradient from the first to the second edge or from the second to the first edge of 5 to 50%.

The gradient in surface properties or thickness is determined by measuring the respective surface roughness Rv, Rz, Rsm and/or thickness at the at the same region of the first and second edge, for example at 5 or 10 mm distance from each edge and calculating the ratio.

The gradients in surface properties Rv, Rz, Rsm may be, independent from each other from the first to the second edge between 10 and 65% or between 15 and 60%, or between 20 and 55% or between 25 and 50% or between 30 and 45% or between 35 and 40%.

The gradient in thickness may be between 10 and 45% or between 15 and 40%, or between 20 and 35% or between 25 and 30%.

The films according to the invention may be provided in any combination of the embodiments. In further variants, the film comprises at least two layers of plasticized polyvinyl acetal or lonomer having different tg.

Further, the film may be provided at least at one edge with a tinted area. The film can be provided at the first and/or at the second edge with a tinted area, but it is possible to provide a film with a tinted area at 3 or 4 edges with such tinted areas. Tinted areas are useful to protect a driver of a car from sunlight. Since in most modern cars, the windscreen is glued to the car body, such tinted areas protect further the adhesive from UV radiation.

All gradients in surface properties Rv, Rz, Rsm may be provided on one or both surfaces of the film. Preferred is that both surfaces are provided with identical surface properties Rv, Rz, Rsm and the respective gradient. In order to prevent optical disturbances, it might be beneficial to provide the surfaces of the film with different surface properties Rv, Rz, Rsm and/or the respective gradients. For example, the surfaces may be provided with at least one surface property Rv, Rz, Rsm having a difference of 5 - 15 % between the surfaces, but the same gradient. In alternative, the surface property Rv, Rz, Rs of the surfaces can be identical on one edge, but the respective gradient may have a difference of 5 - 15 % between the surfaces.

### Detailed Description

Preferable, the film of the invention is provided on the first edge with a surface roughness Rv of 9 - 35 µm.

In addition, films of the invention may further be provided on the first edge with a surface roughness Rz of 15-55 µm.

Further. films of the invention may be provided on the first edge with channels having a pitch Rsm of 100 - 800µm. In variants thereof, Rsm may be between 200 and 350 µm or between 450 and 600 µm

Films of the invention may further be provided on the first edge with a thickness of 200 - 2500 µm, preferable 500 - 900 µm

The surface properties Rz, Rv an/or Rsm of the film are measured according to DIN EN ISO 4287 and DIN ISO 4288. The measuring devices used to measure the surface roughness must satisfy EN ISO 3274. The profile filters used must correspond to DIN EN ISO 11562.

The surface properties Rz and Rv and Rsm may be stochastic or non-stochastic. Stochastic surface roughness may be achieved by extrusion of plasticised polyvinyl acetal or ionomer to a film under melt-fracture conditions and/or embossing with embossing rolls having a stochastic surface. Non-stochastic surface roughness can be achieved by embossing an already produced film between one or two embossing rolls. The already produced film can be manufactured by extrusion, optional under melt-fracture conditions to introduce a basic / fine roughness. An alternative method is to cast films.

Embossing can be carried out in such a way that the two sides of the film have different surface roughness Rv, R_{z}. and Rsm. This can be achieved e.g. by different embossing tools or temperatures of the embossing tools and/or the pressing rollers.

The channels on both surfaces of the film may share an angle of 70 to 90° or 5 - 45° with each other. In another aspect, the channels on at least one surface of the film have an angle of 5 - 45°, preferably 35-45° to the direction of extrusion or the direction of the widest width of the film.

The pitch Rsm of the channels can be the same or different on the surfaces of the film, where a deviation of 5% between the surfaces is regarded as same. The pitch of the channels can be 100-800 µm, preferable 250-500 µm.

### Composition of the films

Films according to the invention may be based on ionomers or plasticized polyvinyl acetal. The term "based on "means that the films consists completely or mostly from ionomers or plasticized polyvinyl acetal, but may comprises further additives added in an minor amount of less than 5 wght% like UV stabilizer, anti-oxidants and anti-adhesives or tacktifyers. Such additives are well known to the person skilled in the art of laminated glazing.

The polyvinyl acetal used in the present invention may be produced in the known way by acetalation of hydrolysed polyvinyl esters. Formaldehyde, acetaldehyde, propionaldehyde, butyraldehyde and such like, preferably butyraldehyde, for example, are used as aldehydes.

Preferable, the polyvinyl acetal is a polyvinyl butyral (PVB) resin. The polyvinyl acetal may contain 10 to 25% by weight, preferably 17 to 23% by weight and particularly preferably 19 to 21% by weight of vinyl alcohol radicals and/or 0 to 20% by weight, preferably 0.5 to 2.5% by weight of acetate radicals.

In a further process variation, polyvinyl acetal is partially crosslinked with a polyaldehyde (in particular glutaraldehyde) and an oxocarboxylic acid (in particular glyoxylic acid) is used as polymer according to WO 2004/063231 A1. Such crosslinked polyvinyl acetal has a viscosity which is 10 to 50% higher than that of the analogous non-crosslinked polyvinyl acetal.

The water content of the films is preferably adjusted to 0.15 to 0.8% by weight, in particular 0.3 to 0.5% by weight.

All plasticisers known in the art of interlayer film, in particular the esters of multivalent acids, polyhydric alcohols or oligoether glycols, such as e.g. adipic acid esters, sebacic acid esters or phthalic acid esters, in particular di-n-hexyl adipate, dibutyl sebacate, dioctyl phthalate, esters of diglycol, triglycol or tetraglycol with linear or branched aliphatic carboxylic acids and mixtures of these esters are suitable, on the one hand, as plasticisers for the partially acetalated polyvinyl alcohols. Esters of aliphatic diols with long chain aliphatic carboxylic acids, in particular esters of triethylene glycol with aliphatic carboxylic acids containing 6 to 10 C atoms, such as 2-ethyl butyric acid or n-heptanoic acid are preferably used as standard plasticisers for polyvinyl acetales. One or several plasticisers from the group consisting of di-n-hexyl adipate (DHA), dibutyl sebacate (DBS), dioctyl phthalate (DOP), esters of diglycol, triglycol or tetraglycol with linear or branched aliphatic carboxylic acids, in particular triethylene glycol-bis-2-ethyl butyrate (3GH), triethylene glycol-bis-n-heptanoate (3G7), triethylene glycol-bis-2-ethyl hexanoate (3G8), tetraethylene glycol-bis-n-heptanoate (4G7) are used particularly preferably.

Films based on polyvinyl acetal preferably contain 25 to 45 parts by weight and most preferred 30 to 40 parts by weight of plasticiser, based on 100 parts by weight of polyvinyl acetal.

The term "ionomer" refers to non-polyvinyl acetal polymers known in the art of laminated glazing. Films based on ionomers are commercially available from Kuraray Europe GmbH under the tradename Sentryglass.

### Process of the invention

Further object of the invention is a process of manufacturing a laminate comprising two transparent sheets with an interlayered film according to the invention. In this process, the two transparent sheets are preferable glass sheets having a curved shape, i.e. having a longer first edge opposing a shorter second edge. Such laminates are used in windscreens and backlights of motor vehicles

The process of the invention is characterized in that a film comprising plasticized polyvinyl acetal or ionomer having a first and a second surface and a first and a second edge opposing each other is provided with a first surface having a gradient in surface roughness with a decline in Rv from the first to the second edge of 5 to 75% is mechanically stretched at the second edge of the film until the gradient is reduced by at least 5 %, then positioned between two transparent sheets and laminated by applying heat and pressure.

In a variant of the process, the film has further a gradient in surface roughness with a decline in Rz from the first to the second edge of 5 to 75% and is mechanically stretched at the second edge of the film until the gradient is reduced by at least 5 %, then positioned between two transparent sheets and laminated by applying heat and pressure.

In a further variant of the process, the film has further on at least the first surface channels having a gradient in Rsm from the first to the second edge of 5 to 75% and is mechanically stretched at the second edge of the film until the gradient is reduced by at least 5 %, then positioned between two transparent sheets and laminated by applying heat and pressure.

In a further variant of the process, the film has further a gradient in thickness from the first to the second edge of 5 to 75 % and is mechanically stretched at the second edge of the film until the gradient is reduced by at least 5 %, then positioned between two transparent sheets and laminated by applying heat and pressure.

In a further variant of the process, the film has further a gradient in thickness from the second to the first edge of 5 to 75% and is mechanically stretched at the first edge of the film until the gradient is reduced by at least 5 %, then positioned between two transparent sheets and laminated by applying heat and pressure.

The process of the invention may be performed with all variants and embodiments of the film as already disclosed.

For example, if the film is provided with a gradient in surface roughness with a decline in Rv from the first to the second edge of 10 to 35%, mechanically stretching at the second edge of the film may be performed until the gradient is less than 10 %, preferable less than 5%. The same stretching process may be performed along the surface roughness R_{z}. and Rsm and/or thickness.

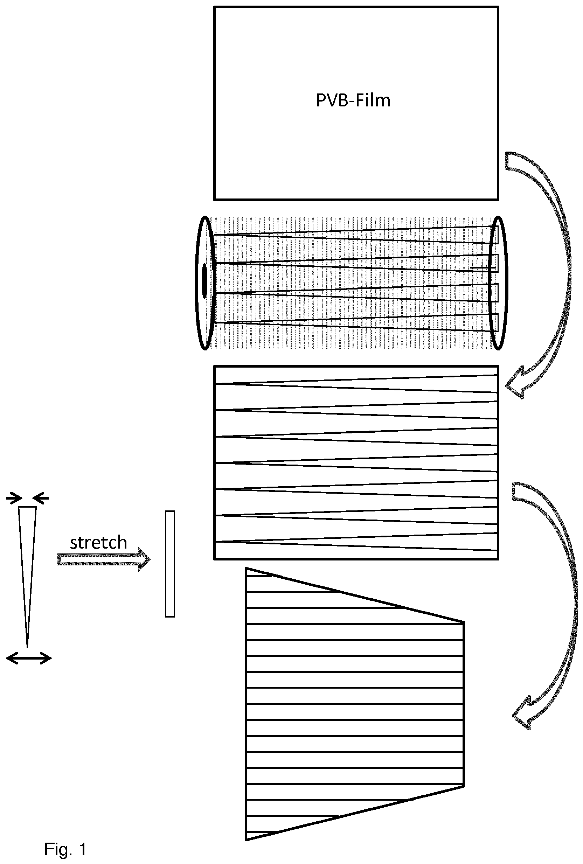

Fig. 1 shows by way of example the stretching process and its effect on the surface roughness of the film. First, a rectangular PVB-film is provided with a gradient in surface structure with the first edge on the right and the second edge on the film. This surface structure and gradient is embossed into the first surface of the film by an appropriate embossing roll. Then, the film is stretched at one edge until the gradient substantially vanishes. With this procedure, a curved film having a uniform surface roughness can be obtained.

After combining the transparent sheets and the film, the laminate is finished by applying heat and pressure. The term "heat and pressure" refers to the well-known lamination processes using autoclaves, vacuum bags or vacuum rings e.g. according to WO 03/033583.

The films produced according to the invention can be used in particular to produce windscreens in automobiles.

## Claims

1. Film based on plasticized polyvinyl acetal or ionomers having a first and a second surface and a first and a second edge opposing each other **characterized in that** at least the first surface is provided with a gradient in surface roughness with a decline in Rv from the first to the second edge of 5 to 75%.

2. Film according to claim 1 **characterized in that** the at least the first surface is provided with a gradient in surface roughness with a decline in Rz from the first to the second edge of 5 to 75%.

3. Film according to claim 1 or 2 **characterized in that** the at least the first surface is provided with channels having a gradient in pitch Rsm from the first to the second edge of 5 to 75%.

4. Film according to any of the claims 1 to 3 **characterized in that** the film is provided with a thickness having a gradient from the first to the second edge of 5 to 75%.

5. Film according to any of the claims 1 to 3 **characterized in that** the film is provided with a thickness having a gradient from the second to the first edge of 5 to 75%.

6. Film according to any of the claims 1 to 5 **characterized in that** the film is provided at least at one edge with a tinted area.

7. Film according to any of the claims 1 to 6 **characterized in that** the film comprises at least two layers of plasticized polyvinyl acetal or ionomers having different tg.

8. Process of manufacturing a laminate comprising two transparent sheets with an interlayered film **characterized in that** a film comprising plasticized polyvinyl acetal or ionomer having a first and a second surface and a first and a second edge opposing each other is provided with a first surface having a gradient in surface roughness with a decline in Rv from the first to the second edge of 5 to 75% is mechanically stretched at the second edge of the film until the gradient is reduced by at least 5 %, then positioned between two transparent sheets and laminated by applying heat and pressure.

9. Process according to claim 8 **characterized in that** the film has further a gradient in surface roughness with a decline in Rz from the first to the second edge of 5 to 75% and is mechanically stretched at the second edge of the film until the gradient is reduced by at least 5 %, then positioned between two transparent sheets and laminated by applying heat and pressure.

10. Process according to claim 8 or 9 **characterized in that** the film has further on at least the first surface channels having a gradient in Rsm from the first to the second edge of 5 to 75% and is mechanically stretched at the second edge of the film until the gradient is reduced by at least 5 %, then positioned between two transparent sheets and laminated by applying heat and pressure.

11. Process according to claim 8 to 10 **characterized in that** the film has further a gradient in thickness from the first to the second edge of 5 to 75 % and is mechanically stretched at the second edge of the film until the gradient is reduced by at least 5 %, then positioned between two transparent sheets and laminated by applying heat and pressure.

12. Process according to claim 8 to 10 **characterized in that** the film has further a gradient in thickness from the second to the first edge of 5 to 75% and is mechanically stretched at the first edge of the film until the gradient is reduced by at least 5 %, then positioned between two transparent sheets and laminated by applying heat and pressure.

13. Use of a film according to claims 1 to 7 for the production of windscreens.
